# EUROPEAN PATENT APPLICATION

(11) **EP 4 744 968 A1**
(43) Date of publication of application: **20.05.2026**
(21) Application number: 24810506.6
(22) Date of filing: 27.06.2024
(51) Int. Cl.: B60R 3/02

(54) **PEDAL SYSTEM, MOTOR DEVICE, AND CONTROL METHOD FOR PEDAL**

(30) Priority: 11.07.2023 CN 202310852876
(71) Applicant: WINBO-Dongjian Automotive Technology Co., Ltd., Foshan, Guangdong 528000 (CN)
(72) Inventor: LAI, Peiquan, Foshan, Guangdong 528000 (CN); YANG, Jie, Foshan, Guangdong 528000 (CN); CHEN, Yongbo, Foshan, Guangdong 528000 (CN); YANG, Zhuen, Foshan, Guangdong 528000 (CN); RONG, Jianzhuang, Foshan, Guangdong 528000 (CN); HE, Weiting, Foshan, Guangdong 528000 (CN); LIN, Guowei, Foshan, Guangdong 528000 (CN); CHEN, Nengtian, Foshan, Guangdong 528000 (CN)
(74) Representative: Herrero & Asociados, S.L.
(86) International application number: PCT/CN2024/101993
(87) International publication number: WO 2024/240271

(57) **Abstract**

A pedal system (100), a motor device (10), and a control method for a pedal (124). The motor device (10) comprises a body (11) and a door (12), wherein the door (12) is connected to the body (11) in an openable and closable manner, and at least part of the door (12) is configured to be capable of being away from the body (11) in an opening and closing direction of the door (12). Moreover, the pedal system (100) comprises a sensing apparatus (110) and a pedal apparatus (120), wherein the sensing apparatus (110) is composed of at least one component, is arranged at any position of the body (11), or the door (12), or the joint between the body (11) and the door (12), and is configured to monitor the relative position between the body (11) and the door (12), and the pedal apparatus (120) comprises a driving apparatus (123) and a pedal (124) connected to the driving apparatus (123). When detecting the relative position between the body (11) and the door (12), the sensing apparatus (110) generates a control signal on the basis of the relative position, and transmits the control signal to the driving apparatus (123), such that the driving apparatus (123) responds to the control signal, and controls the pedal (124) to move close to or away from the body (11) in the opening and closing direction, thereby achieving the aim of adjusting the pedal according to the actual door opening and closing condition of the motor device (10).

## Description

This application claims priority of Chinese Patent Application No. 202310852876.8, filed July 11, 2023, titled "pedal system, mobility apparatus, and control method of pedal", which is herein incorporated by reference in its entirety.

### TECHNICAL FIELD

Embodiments of the present disclosure relate to the technical field of accessories of mobility apparatuses, in particular to a pedal system, a mobility apparatus, and a control method of a pedal.

### BACKGROUND

A pedal, a device installed at a lower part of a mobility apparatus, is convenient for a user to get up and down the mobility apparatus. However, a fixed pedal (i.e., the position of the pedal on the mobility apparatus is fixed after installation) in the related art is not capable of being adjusted according to actual opening and closing of a door of the mobility apparatus, resulting in excessive occupation of external space of the mobility apparatus when the pedal is not needed, thereby affecting driving quality of the mobility apparatus, and driving safety of the user.

### SUMMARY OF THE DISCLOSURE

Embodiments of the present disclosure provide a pedal system, a mobility apparatus, and a control method of a pedal, in order to solve the problem that the existing fixed pedal is not capable of being adjusted according to actual opening and closing of a door of the mobility apparatus, thereby affecting driving quality of the mobility apparatus and driving safety of a user.

In a first aspect, the embodiments of the present disclosure provide a pedal system, which is performed by a mobility apparatus. The mobility apparatus includes a body and a door. The door is connected to the body and is capable of being opened and closed with respect to the body, and at least a part of the door is able to move away from the body along an open-close direction of the door.

The pedal system includes a sensing device and a pedal device. The sensing device includes at least one component. The sensing device is arranged on the body, on the door, or on a position at the connection between the body and the door. The sensing device is configured to monitor a relative position between the body and the door. The pedal device includes a driving device and a pedal connected to the driving device. The driving device is configured to control the pedal to move closer or away from the body along the open-close direction, in response to a control signal generated based on the relative position.

In some embodiments, the sensing device is a distance sensor. The pedal moves away from the body along the open-close direction, in response to the sensing device detecting that a distance between the body and the door is greater than a preset distance. The pedal moves close to the body along the open-close direction, in response to the sensing device detecting that the distance between the body and the door is less than the preset distance.

In some embodiments, the sensing device is a pressure sensor. The pedal moves away from the body along the open-close direction, in response to the sensing device detecting that a force on the body applied by the door is less than a preset value. The pedal moves close to the body along the open-close direction, in response to the sensing device detecting that the force on the body applied by the door is greater than the preset value.

In some embodiments, the sensing device includes one or more output terminals. One of the one or more output terminals is connected to the driving device, and another of the one or more output terminals is configured to connect another component of the mobility apparatus.

In some embodiments, the pedal device further includes a first connecting rod, a second connecting rod, and a limiting device. The first connecting rod is pivoted to the second connecting rod, the driving device is connected to one end of the first connecting rod away from the second connecting rod, the pedal is disposed at one end of the second connecting rod away from the first connecting rod, and the second connecting rod passes through the limiting device.

In some embodiments, the limiting device includes an mounting base and a limiting member connected to the mounting base. The mounting base is mounted on a chassis of the mobility apparatus, and the limiting member is a hollow structure for the second connecting rod to pass through, and is located on one side of the mounting base away from the chassis.

In some embodiments, the pedal device includes a first pivot shaft and a second pivot shaft. The first pivot shaft is configured to connect the first connecting rod and the second connecting rod, and the second pivot shaft is configured to connect the mounting base and the limiting member. The driving device includes a driving shaft, and the driving shaft is configured to connect to the first connecting rod. An axis of the driving shaft, an axis of the first pivot shaft, and an axis of the second pivot shaft are parallel to each other.

In some embodiments, the limiting member is fixedly connected to the mounting base, and a bottom of the limiting member is spaced apart from the second connecting rod and tilted with respect to the second connecting rod.

In some embodiments, the limiting device includes a limiting roller, and the limiting roller is connected to the limiting member and located between the second connecting rod and the mounting base. A length of an axis of the limiting roller is greater than or equal to a width of the second connecting rod.

In a second aspect, the embodiments of the present disclosure also provide a control method of a pedal, which is performed by the pedal system described in any of the above aspects. The control method includes: monitoring the relative position between the body and the door through the sensing device; controlling, by the driving device, the pedal to move close to or away from the body along an open-close direction, in response to the control signal generated based on the relative position.

Thirdly, the embodiments of the present disclosure also provide a mobility apparatus. The mobility apparatus includes the pedal system as described in any of the above aspects, or the control method of the pedal as described in any of the above aspects.

The pedal system according to the embodiments of the present disclosure may be performed by a mobility apparatus. The mobility apparatus includes a body and a door, the door is connected to the body and may be opened and closed to the body, and at least a part of the door is capable of moving away from the body along an open-close direction of the door.

The pedal system includes the sensing device and the pedal device. The sensing device includes at least one component. The sensing device is arranged on the body, or on the door, or on a position at the connection between the body or the door. The sensing device is configured to monitor the relative position between the body and the door. The pedal device includes the driving device and the pedal connected to the driving device. When the sensing device detects the relative position between the body and the door, a control signal based on the relative position may be generated and the control signal may be controlled to be transmitted to the driving device. When receiving the control signal generated by the sensing device, the driving device may respond to the control signal and control the pedal to move close to or away from the body along the open-close direction, thus achieving the purpose of adjusting the pedal according to the actual opening and closing of the door of the mobility apparatus, and ensuring driving quality of the mobility apparatus and driving safety of the user.

It may be understood that in practical use, due to frequent displacement of the door of the mobility apparatus, while the body of the mobility apparatus is in a fixed state. Compared to arrange the sensing device on the door of the mobility apparatus, arranging the sensing device only on the body may more accurately monitor the relative position between the body and the door, and generate accurate control signal based on the relative position, thus achieving precise control of pedal displacement state to improve user experience.

The relative position between the body and the door is directly monitored through the sensing device, and the control signal is transmitted to the driving device. Compared to monitoring the door state through the mobility apparatus and controlling an electric rising and lowering of the pedal based on the door state, a door-state signal of the mobility apparatus may be received timely, thereby reducing the occurrence of lifting delay of the pedal.

### BRIEF DESCRIPTION OF THE DRAWINGS

In order to provide a clearer explanation of the technical solution in the embodiments of the present disclosure, a brief introduction may be given below to the accompanying drawings required in the description of the embodiments. Obviously, the accompanying drawings in the following description are only some embodiments of the present disclosure. For those skilled in the art, other accompanying drawings may be obtained based on these drawings without any creative efforts.
FIG. 1 is a partial schematic structural view of a mobility apparatus according to an embodiment of the present disclosure.
FIG. 2 is a structural schematic view of a pedal device in a folded state according to an embodiment of the present disclosure.
FIG. 3 is a structural schematic view of the pedal device in an unfolded state shown in FIG. 2.
FIG. 4 is an enlarged structural schematic view of part A of the mobility apparatus shown in FIG. 1.
FIG. 5 is a structural schematic view of the mobility apparatus from another perspective shown in FIG. 1.
FIG. 6 is an enlarged structural view of part B of the mobility apparatus shown in FIG. 5.
FIG. 7 is a flowchart of a control method of a pedal according to an embodiment of the present disclosure.

### DETAILED DESCRIPTION

The following may provide a clear and complete description of the technical solution in the embodiments of the present disclosure in conjunction with the accompanying drawings. Obviously, the described embodiments are only a part of the embodiments of the present disclosure, but not all of them. Based on the embodiments of the present disclosure, all other embodiments obtained by those skilled in the art without creative effort fall within the protection scope of the present disclosure.

A pedal is a device installed at a lower part of a mobility apparatus, and is convenient for a user to get up and down the mobility apparatus. However, a fixed pedal (i.e., the position of the pedal on the mobility apparatus is fixed after installation) in the related art is not capable of being adjusted according to actual opening and closing of a door of the mobility apparatus, resulting in excessive occupation of external space of the mobility apparatus when the pedal is not needed, thereby affecting driving quality of the mobility apparatus, and driving safety of the user.

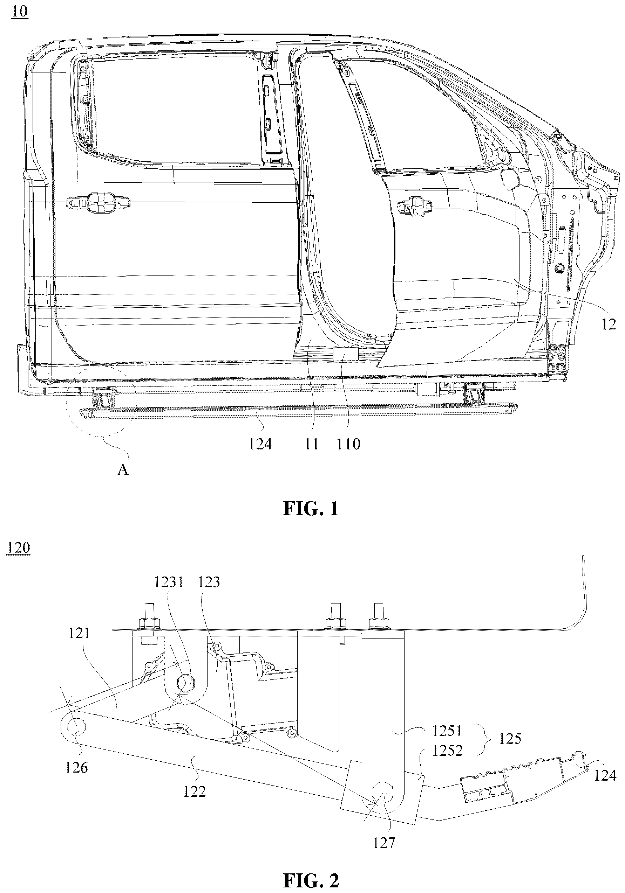

Based on the above technical problem, some embodiments of the present disclosure provide a pedal system 100, as shown in FIG. 1, which is a partial structural schematic view of a mobility apparatus 10 according to an embodiment of the present disclosure.

As shown in FIG. 1, in some embodiments, the mobility apparatus 10 includes a body 11 and a door 12. The door 12 is connected to the body 11 and is able to be opened and closed with respect to the body 11. At least a part of the door 12 is able to move away from the body 11 along an open-close direction of the door 12.

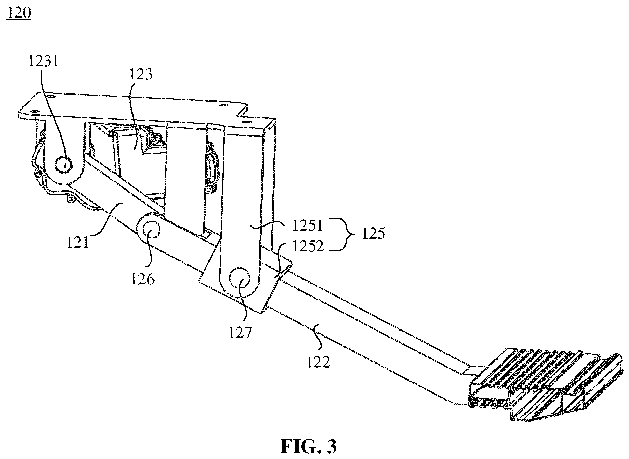

As shown in FIG. 2 and FIG. 3, FIG. 2 is a structural schematic view of a pedal device 120 in a folded state according to an embodiment of the present disclosure, and FIG. 3 is a structural schematic view of the pedal device 120 in an unfolded state shown in FIG. 2. In some embodiments, the pedal system 100 includes a sensing device 110 and a pedal device 120. The sensing device 110 includes at least one component. The sensing device 110 is arranged on the body 11, or on the door 12, or on any position at the connection of the body 11 and the door 12. The sensing device 110 is configured to monitor a relative position between the body 11 and the door 12. The pedal device 120 includes a driving device 123 and a pedal 124 connected to the driving device 123. When detecting the relative position between the body 11 and the door 12, the sensing device 110 may generate a control signal based on the relative position and transmit the control signal to the driving device 123. When receiving the control signal generated by the sensing device 110, the driving device 123 may control the pedal 124 to move close to or away from the body 11 along the open-close direction, in response to the control signal. Thus, the purpose of adjusting the pedal 124 according to the actual opening and closing of the door of the mobility apparatus 10 is achieved, thereby ensuring driving quality of the mobility apparatus 10 and driving safety of the user.

It may be understood that in practical use, the door 12 of the mobility apparatus 10 may usually be in a displacement state, while the body 11 of the mobility apparatus 10 is in a fixed state. Compared with arranging the sensing device 110 on the door 12 of the mobility apparatus 10, placing the sensing device 110 only on the body 11 may more accurately monitor the relative position between the body 11 and the door 12, and the sensing device 110 may generate accurate control signals based on the relative position, thereby achieving precise control of the displacement state of the pedal 124 and improving user experience.

Besides, compared with monitoring the door state (i.e., the state of the door) through the mobility apparatus 10 and controlling electric rising and lowering of the pedal 124 based on the door state, in some embodiments of the present disclosure, the sensing device 110 may directly monitor the relative position between the body 11 and the door 12 and transmit the control signal to the driving device 123, thus, a door-state signal of the mobility apparatus 10 may be received in time, thereby reducing the occurrence of lifting delay of the pedal.

In some embodiments, the sensing device 110 may be a distance sensor. In some embodiments, when the sensing device 110 detects that a distance between the body 11 and the door 12 is greater than a preset distance, the pedal 124 moves away from the body 11 along the open-close direction, and finally moves to a first position in which the pedal device 120 is in the fully unfolded state as shown in FIG. 3. When the sensing device 110 detects that the distance between the body 11 and the door 12 is less than the preset distance, the pedal 124 may move close to the body 11 along the open-close direction, and finally move to a second position in which the pedal device 120 is in the folded state as shown in FIG. 2, thereby achieving concealment of the pedal 124.

In some embodiments, the sensing device 110 may also be a pressure sensor. When the sensing device 110 detects that a force between the body 11 and the door 12 is less than a preset value, the pedal 124 moves away from the body 11 along the open-close direction, and finally move to the first position in which the pedal device 120 is in the fully unfolded state as shown in FIG. 3. When the sensing device 110 detects that the force between the body 11 and the door 12 is greater than the preset value, the pedal 124 moves close to the body 11 along the open-close direction, and finally move to the second position in which the pedal device 120 is in the folded state as shown in FIG. 2, thereby achieving concealment of the pedal 124.

It may be understood that the present disclosure does not limit specific values of the preset distance and the preset value mentioned above. The preset value may be adjusted based on the actual size and volume of the mobility apparatus 10.

In some embodiments, the sensing device 110 may include one or more output terminals. One of the one or more output terminals is connected to the driving device 123, allowing the sensing device 110 to transmit the control signal generated based on the relative position between the body 11 and the door 12 to the driving device 123, so as to adjust the pedal 124 according to the actual opening and closing of the door of the mobility apparatus 10. Another of the one or more output terminals may be configured to connect another component of the mobility apparatus 10 (such as a welcome light, an air conditioner, an engine start terminal, etc.). In this way, when the sensing device 110 generates a control signal based on the relative position between the body 11 and the door 12, the control signal may not only control the displacement of the pedal 124, but also control the switch of the welcome light, the switch of the air conditioner, the start and stop of the engine, and other procedures, thereby further improving intelligent operation of the mobility apparatus 10 and improving user experience.

In some embodiments, as shown in FIG. 2, the pedal device 120 may include a first connecting rod 121, a second connecting rod 122, and a limiting device 125. The first connecting rod 121 is pivoted to the second connecting rod 122. The driving device 123 is connected to one end of the first connecting rod 121 away from the second connecting rod 122. The pedal 124 is arranged at one end of the second connecting rod 122 away from the first connecting rod 121. The second connecting rod 122 is threaded or passes through the limiting device 125.

It may be understood that as the first connecting rod 121 is connected to the second connecting rod 122, when the sensing device 110 senses the relative position between the body 11 and the door 12 and generates a "door open" signal, the driving device 123 may drive the first connecting rod 121 to rotate towards the second connecting rod 122. At this time, the first connecting rod 121 may drive the second connecting rod 122 to move, and enable the pedal 124 located at one end of the second connecting rod 122 to move away from the body 11 along the open-close direction, such that the pedal device 120 is in the fully unfolded state as shown in FIG. 3. When the sensing device 110 senses the relative position between the body 11 and the door 12 and generates a "door closing" signal, the driving device 123 may drive the first connecting rod 121 to rotate in a direction away from the second connecting rod 122. At this time, the first connecting rod 121 may drive the second connecting rod 122 to move, and the pedal 124 located at one end of the second connecting rod 122 may move close to the body 11 along the open-close direction, such that the pedal device 120 is in the folded state as shown in FIG. 2.

It should be noted that in some embodiments, since the second connecting rod 122 passes through the limiting device 125, the limiting device 125 may limit a position of the second connecting rod 122 when the second connecting rod 122 moves in the gravity direction, thereby reducing the possibility that the pedal 124 is unable to move to a designated position since the second connecting rod 122 lays down or becomes loose when the first connecting rod 121 drives the second connecting rod 122 to move. It may be understood that, in some embodiments, a length of the first connecting rod is not limited. When the length of the first connecting rod is greater, a stretching distance of the second connecting rod 122 may be increased under a same swing amplitude of the first connecting rod 121.

In some embodiments, as shown in FIG. 3, the limiting device 125 may include a mounting base 1251 and a limiting member 1252 connected to each other. The mounting base 1251 is mounted on a chassis (not shown in the drawings) of the mobility apparatus 10. The limiting member 1252 is a hollow structure for the second connecting rod 122 to pass through, and is located on one side of the mounting base 1251 away from the chassis. Therefore, it is possible to limit the position of the second connecting rod 122 when the second connecting rod 122 is displacing in the gravity direction.

As illustrated in FIG. 3, in the above embodiments, the pedal device 120 may include a first pivot shaft 126 and a second pivot shaft 127. The first pivot shaft 126 is configured to connect the first connecting rod 121 and the second connecting rod 122. The second pivot shaft 127 is configured to connect the mounting base 1251 and the limiting member 1252. The driving device 123 has a driving shaft 1231, the driving shaft 1231 is configured to connect to the first connecting rod 121. An axis of the driving shaft 1231, an axis of the first pivot shaft 126, and an axis of the second pivot shaft 127 are arranged parallel to each other, thereby improving a transmission efficiency of the driving device 123 for driving the first connecting rod 121 and the second connecting rod 122, and reducing power loss.

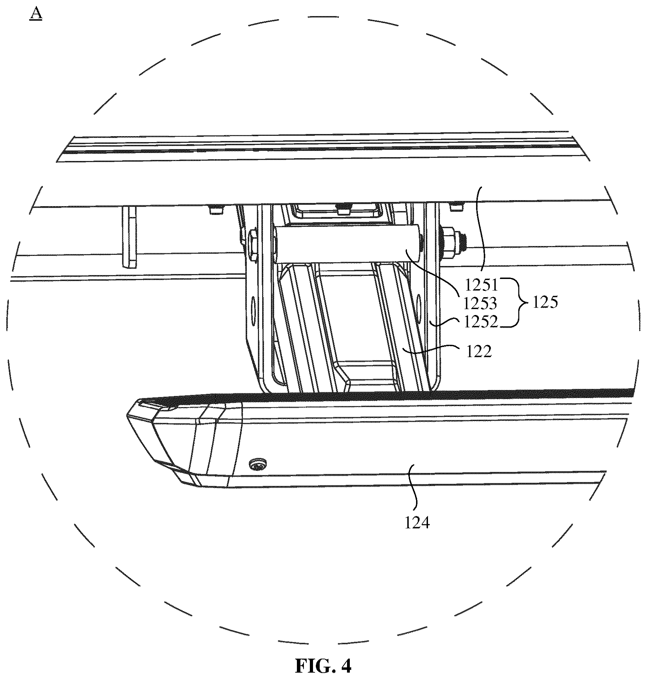

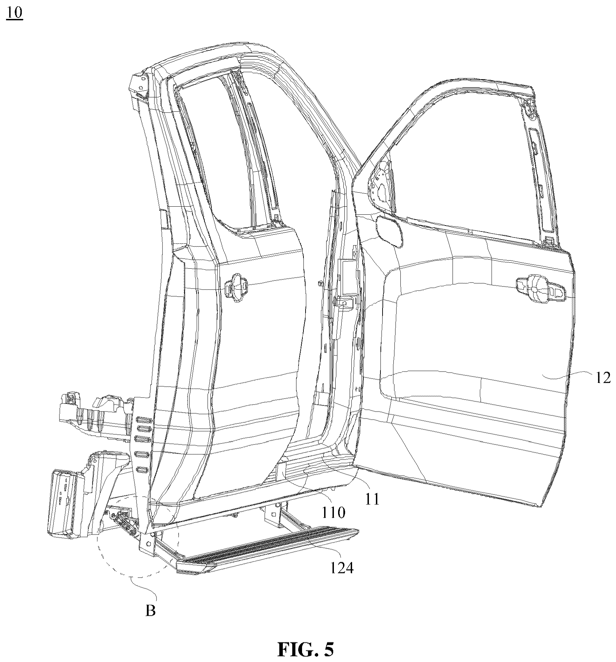

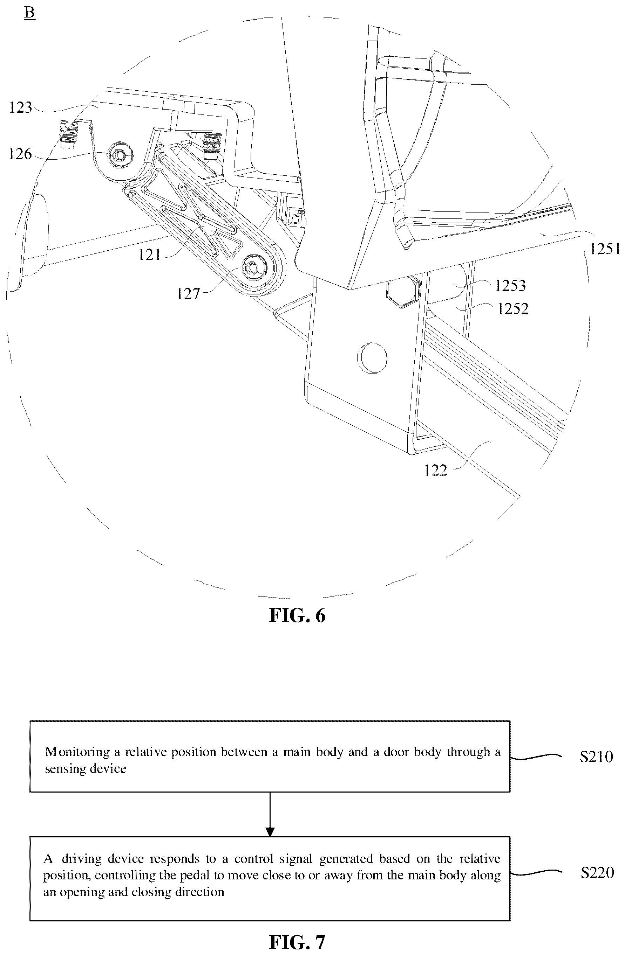

In some embodiments, as shown in FIG. 4 to FIG. 6, FIG. 4 is an enlarged structural schematic view of part A of the mobility apparatus 10 shown in FIG. 1 (a front view of the pedal device 120 according to some embodiments of the present disclosure), FIG. 5 is a structural schematic view of the mobility apparatus 10 from another perspective shown in FIG. 1, and FIG. 6 is an enlarged structural schematic view of part B of the mobility apparatus 10 shown in FIG. 5 (a side view of the pedal device 120 according to some embodiments of the present disclosure).

As shown in FIG. 4 and FIG. 6, in some embodiments, the limiting member 1252 may be fixedly connected to the mounting base 1251, such that when the driving device 123 drives the first connecting rod 121 and the second connecting rod 122 to move close to or away from the body 11, the limiting member 1252 may better limit the position of the second connecting rod 122, thereby further reducing the possibility that the second connecting rod 122 lays down or loosens during the displacement process. Besides, a bottom of the limiting member 1252 may be spaced apart from the second connecting rod 122 and the bottom of the limiting member 1252 is tilted with respect to the second connecting rod 122, thereby reducing occurrence of scratches between the second connecting rod 122 and the bottom of the limiting member 1252 during the displacement process.

Further, as shown in FIG. 4 and FIG. 6, in the above embodiments, the limiting device 125 may include a limiting roller 1253. The limiting roller 1253 is connected to the limiting member 1252 and is located between the second connecting rod 122 and the mounting base 1251, thereby better limiting the position of the second connecting rod 122. Besides, it may be understood that due to wheel-shape structural characteristics of the limiting roller 1253, when the second connecting rod 122 moves relative to the limiting member 1252, a friction force generated between the limiting roller 1253 and the second connecting rod 122 when the limiting roller 1253 is sliding with the second connecting rod 122 via the limiting roller 1253, thereby not only making the displacement of the second connecting rod 122 smoother, reducing stagnation during the displacement process, but also reducing scratches of the surface of the second connecting rod 122.

In addition, in the above embodiments, an axis length of the limiting roller 1253 may also be greater than or equal to a width of the second connecting rod 122, thereby achieving a more comprehensive limiting effect on the second connecting rod 122.

Embodiments of the present disclosure also provide a control method of pedal 124. As shown in FIG. 7, FIG. 7 is a flowchart of a control method of pedal 124 according to an embodiment of the present disclosure. In some embodiments, the control method includes the following operations.

Operation S210: the method includes monitoring a relative position between a body 11 and a door 12 through a sensing device 110.

Operation S220: the method includes controlling, by a driving device 123, the pedal 124 to move close to or away from the body 11 along an open-close direction, in response to a control signal generated based on the relative position.

In some embodiments, when detecting the relative position between the body 11 and the door 12, the sensing device 110 may generate a control signal based on the relative position and transmit the control signal to the driving device 123. When receiving the control signal generated by the sensing device 110, the driving device 123 may control the pedal 124 to move close to or away from the body 11 along the open-close direction in response to the control signal. Thus, the purpose of adjusting the pedal 124 according to the actual opening and closing of the door of the mobility apparatus 10 is achieved, thereby ensuring driving quality of the mobility apparatus 10 and driving safety of the user.

In addition, some embodiments of the present disclosure also provide a mobility apparatus 10, the mobility apparatus 10 may include the pedal system 100 mentioned in any of the above embodiments, or the mobility apparatus 10 may be applied with the control method of the pedal 124 mentioned in the above embodiments. It should be noted that the mobility apparatus 10 according to some embodiments may be a mobility apparatus such as a pickup truck or a car, or a motor ship such as a ship or a yacht. That is to say, as long as including the pedal system 100 or applying with the control method of the pedal 124 mentioned above, the mobility apparatus 10 is included in the protection scope required by the present disclosure.

In the above embodiments, the description of each embodiment has its own emphasis. For the parts which are not detailed in one embodiment, please refer to the relevant descriptions of other embodiments.

In the description of the present disclosure, the terms "first" and "second" are only used for descriptive purposes and are not to be understood as indicating or implying relative importance or implying the quantity of indicated technical features. Therefore, features limited to "first" and "second" may explicitly or implicitly include one or more features.

The above provides a detailed introduction to the pedal system, the mobility apparatus, and the control method of the pedal according to the embodiments of the present disclosure. Specific examples are applied in the present disclosure to explain the principles and implementation methods of the present disclosure. The explanations of the above embodiments are only configured to help understand the methods and core ideas of the present disclosure. For those skilled in the art, there may be changes in the specific implementation methods and application scope based on the ideas of the present disclosure. In summary, the content of this specification should not be understood as a limitation on the present disclosure.

## Claims

1. A pedal system for a mobility apparatus, the mobility apparatus comprising a body and a door, the door being connected to the body and able to be opened and closed with respect to the body, and at least a part of the door being able to move away from the body along an open-close direction of the door;
the pedal system comprising:
a sensing device, comprising at least one component, arranged on the body, or the door, or on a position at the connection between the body and the door, and configured to monitor a relative position between the body and the door; and
a pedal device, comprising a driving device and a pedal connected to the driving device, wherein the driving device is configured to control the pedal to move close to or away from the body along the open-close direction, in response to a control signal generated based on the relative position.

2. The pedal system according to claim 1, wherein the sensing device is a distance sensor; the pedal moves away from the body along the open-close direction in response to the sensing device detecting that a distance between the body and the door is greater than a preset distance; and the pedal moves close to the body along the open-close direction in response to the sensing device detecting that the distance between the body and the door is less than the preset distance; or
the sensing device is a pressure sensor, the pedal moves away from the body along the open-close direction in response to the sensing device detecting that a force between the body and the door is less than a preset value; the pedal moves close to the body along the open-close direction in response to the sensing device detecting that the force between the body and the door is greater than the preset value.

3. The pedal system according to claim 1, wherein the sensing device comprises one or more output terminals, one of the one or more output terminals is connected to the driving device, and another of the one or more terminals is configured to connect another component of the mobility apparatus.

4. The pedal system according to claim 1, wherein the pedal device comprises a first connecting rod, a second connecting rod, and a limiting device; the first connecting rod is pivoted to the second connecting rod, the driving device is connected to one end of the first connecting rod away from the second connecting rod, the pedal is arranged at one end of the second connecting rod away from the first connecting rod, and the second connecting rod passes through the limiting device.

5. The pedal system according to claim 4, wherein the limiting device comprises a mounting base and a limiting member connected to the mounting base; wherein the mounting base is mounted on a chassis of the mobility apparatus, the limiting member is a hollow structure for the second connecting rod to pass through, and the limiting member is located on one side of the mounting base away from the chassis.

6. The pedal system according to claim 5, wherein the pedal device comprises a first pivot shaft and a second pivot shaft, the first pivot shaft is configured to connect the first connecting rod and the second connecting rod, the second pivot shaft is configured to connect the mounting base and the limiting member, the driving device comprises a driving shaft, the driving shaft is configured to connect to the first connecting rod, and an axis of the driving shaft, an axis of the first pivot shaft, and an axis of the second pivot shaft are parallel to each other.

7. The pedal system according to claim 5, wherein the limiting member is fixedly connected to the mounting base, and a bottom of the limiting member is spaced apart from the second connecting rod and tilted with respect to the second connecting rod.

8. The pedal system according to claim 7, wherein the limiting device comprises a limiting roller, the limiting roller is connected to the limiting member and located between the second connecting rod and the mounting base, wherein a length of an axis of the limiting roller is greater than or equal to a width of the second connecting rod.

9. A control method for controlling a pedal performed by the pedal system of any one of claims 1-8, the control method comprising:
monitoring the relative position between the body and the door through the sensing device;
controlling, by the driving device, the pedal to move close to or away from the body along an open-close direction, in response to the control signal generated based on the relative position.

10. A mobility apparatus, comprising a pedal system according to any one of claims 1-8, or comprising a control method of the pedal according to claim 9.
